## Europäisches Patentamt

## European Patent Office

## Office européen des brevets

(19)

(11) Veröffentlichungsnummer: **0 082 560**
**B1**

(12) **EUROPÄISCHE PATENTSCHRIFT**

(45) Veröffentlichungstag der Patentschrift:
**18.03.87**

(21) Anmeldenummer: **82201582.2**

(22) Anmeldetag: **13.12.82**

(51) Int. Cl.⁴: **G 01 N 22/04**

(54) **Anordnung zur Messung der Feuchte.**

(30) Priorität: **18.12.81 DE 3150202**

(43) Veröffentlichungstag der Anmeldung:
**29.06.83 Patentblatt 83/26**

(45) Bekanntmachung des Hinweises auf die Patenterteilung:
**18.03.87 Patentblatt 87/12**

(84) Benannte Vertragsstaaten:
**DE FR GB SE**

(56) Entgegenhaltungen:
**DE-A-2 715 947**

**IEEE TRANSACTIONS ON MICROWAVE THEORY
AND TECHNIQUES, Band MTT-29, Nr. 7, 29. Juli
1981, New York W. MEYER et al. "Feasibility study
of density-independent moisture measurement
with microwaves", Seiten 732-739
IEEE TRANSACTIONS ON INSTRUMENTATION
AND MEASUREMENT, Band 28, Nr. 4, Dezember
1979, New York W.J. CHUDOBIAK et al. "Recent
advances in broad-band VHF and UHF transmission
line methods for moisture content and dielectric
constant measurement", Seiten 284-289
MEASUREMENT TECHNIQUES, Band 23, Nr. 4,
April 1980, New York P.R. ISMATULLAEV et al.
"Measurement of the humidity of cottonseeds and
cottonseed products using uhf methods", Seiten
361-363**

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL- 5621 BA Eindhoven (NL)**
(84) Benannte Vertragsstaaten: **FR GB SE**

(72) Erfinder: **Knöchel, Reinhard, Dr., Alte Eiche 8,
D-2200 Kölln- Reisiek (DE)**

(74) Vertreter: **Hartmann, Heinrich, Dipl.- Ing., Philips
Patentverwaltung GmbH Billstrasse 80 Postfach
10 51 49, D-2000 Hamburg 28 (DE)**

## Beschreibung

Die Erfindung bezieht sich auf eine Anordnung zur Messung der Feuchte in einer wasserhaltigen Substanz mit Mikrowellen mit einer Sendeeinrichtung, bestehend aus einer Signalquelle und einer mit ihr verbundenen Sendeantenne, mit einer im Strahlungsfeld der Sendeantenne angeordneten Schicht der wasserhaltigen Substanz, mit einer Empfangsantenne, die die Welle innerhalb der Substanz empfängt, und einer mit der Empfangsantenne verbundenen Auswerteeinrichtung.

Es sind verschiedene Anordnungen zur Messung der Feuchte in einer wasserhaltigen Substanz mit Mikrowellen bekannt.

Aus "Proceedings of the Microwave Power Symposium", Toronto, 9.-12. Juni 1981, Seite 193-195, ist eine Anordnung bekannt, bei der eine koaxiale Antenne in ein Rohr mündet, in dem sich die zu messende Substanz befindet. Die koaxiale Antenne, die in der Substanz eingetaucht ist, ist mit einer Meßeinrichtung verbunden, die den Reflexionsfaktor der koaxialen Antenne, der von der Dielektrizitätskonstanten und damit dem Wassergehalt der im Rohr befindlichen Substanz abhängt, bestimmt.

Diese Meßanordnung hat den Nachteil, daß eine sehr genaue und damit aufwendige Bestimmung des Reflexionsfaktors am Ende der koaxialen Antenne erforderlich ist. Außerdem beeinflußt nur der im Rohr in unmittelbarer Nähe der koaxialen Antenne befindliche Teil der zu messenden Substanz den gemessenen Reflexionsfaktor. Die Meßanordnung ist daher für inhomogene Substanzen nicht verwendbar.

Aus ""Journal of Microwave Power", Jahrgang 14 von 1979, Heft 4, Seiten 363 bis 365, ist ein Streifenleitungssensor zur Messung der Feuchte mit Mikrowellen bekannt. Eine auf einer Trägerplatte angeordnete Streifenleitung ist von der zu messenden Substanz umgeben, die vom Streufeld der Streifenleitung durchdrungen wird. Die in der Substanz enthaltene Feuchte beeinflußt über daß Streufeld die Dämpfung der Streifenleitung, die mit einer Meßeinrichtung zur Messung der Dämpfung verbunden ist.

Diese Anordnung hat wie die koaxiale Antenne den Nachteil, daß das Streufeld nur in der unmittelbaren Umgebung der Streifenleitung vorliegt und damit nur ein kleiner Teil der zu messenden Substanz die Dämpfung der Streifenleitung beeinflußt. Auch diese Anordnung ist somit nicht zur Messung an größeren Mengen inhomogener Substanzen verwendbar. Darüber hinaus haben Dämpfungsmessungen den Nachteil, empfindlich gegen Störungen durch stehende Wellen zu sein, wodurch eine Messung mit der beschriebenen Anordnung ungenau wird.

Hohe Feuchten sind mit Mikrowellen in der Praxis schwierig zu bestimmen, da die auszumessenden, stark wasserhaltigen Substanzen vielfach aus einer geringen Menge eines Stoffes mit einer niedrigen Dielektrizitätskonstanten, typischerweise mit einem Wert zwischen etwa 2 und etwa 5, und einer großen Menge Wasser mit einer Dielektrizitätskonstanten von etwa 80 bestehen. Die resultierende Dielektrizitätskonstante der wasserhaltigen Substanz weicht dann nur wenig von der Dielektrizitätskonstanten des Wassers ab, Änderungen des Wassergehaltes beeinflussen die Ausbreitungseigenschaften der Substanz und damit die Messungen nur in geringem Maße. Die bekannten Anordnungen weisen daher bei hoher Feuchte große Meßungenauigkeiten auf.

Die Erfindung hat die Aufgabe, eine Anordnung zur Messung der Feuchte in einer wasserhaltigen Substanz mit Mikrowellen zu schaffen, die auch bei hohen Feuchten, d.h. stark wasserhaltigen Substanzen, eine einfache, störunanfällige und genaue Messung ermöglicht. Insbesondere sollen Verfälschungen der Meßergebnisse durch Inhomogenitäten der Substanz sowie durch Reflexionen und stehende Wellen vermindert werden.

Diese Aufgabe wird erfindungsgemäß dadurch gelöst, daß die Sendeantenne eine wenigstens nahezu ebene elektromagnetische Welle in die Substanz einstrahlt, daß als Empfangsantenne mindestens eine Meßsonde vorgesehen ist und daß in der Auswerteeinrichtung die Phase der durch die Substanz tretenden Welle durch Vergleich mit einer Referenz bestimmt wird.

Nach einer Weiterbildung der Erfindung sind wenigstens zwei Meßsonden vorgesehen, die in Ausbreitungsrichtung der Welle um einen festen Abstand gegeneinander versetzt angeordnet sind, und ist die Auswerteeinrichtung derart ausgebildet, daß sie den Unterschied der Phasen der von den Meßsonden empfangenen Wellen bestimmt.

Nach einer anderen Weiterbildung der Erfindung ist die Sendeeinrichtung derart ausgebildet, daß sie eine in ihrer Frequenz modulierte Welle in die Substanz einstrahlt, ist nur eine Meßsonde zum Empfang der durch die Substanz tretenden Wellen vorgesehen und ist die Auswerteeinrichtung derart ausgebildet, daß sie die Änderung der Phase der empfangenen Welle in Abhängigkeit von ihrer Frequenz bestimmt.

Die erfindungsgemäße Anordnung hat den Vorteil, daß die Welle in einen großen Teil der auszumessenden, wasserhaltigen Substanz eingestrahlt wird. Die mit der erfindungsgemäßen Anordnung durchgeführte Messung ist daher unempfindlich gegen Inhomogenitäten der Substanz. Auch der störende Einfluß stehender Wellen auf die Meßgenauigkeit ist bei der erfindungsgemäßen Anordnung gegenüber bekannten Anordnungen vermindert. Die gesamte erfindungsgemäße Anordnung ist einfach aufgebaut, hat den Vorteil einer kontinuierlichen Meßwerterfassung und ist daher zur Messung der Feuchte in der Prozeßautomatisierung verwendbar.

Nach einer vorteilhaften Weiterbildung der Erfindung sind die Meßsonde oder Meßsonden als integrierte Mikrowellenschaltungen ausgebildet, die aus mindestens zwei flächig aneinanderliegenden, dielektrischen Platten bestehen, zwischen denen streifenförmige, elektrische Leiter angeordnet sind, und daß die nach außen gekehrten Flächen der äußeren Platten wenigstens teilweise mit einem elektrisch leitenden Belag bedeckt.

In einer weiteren Ausgestaltung der Erfindung ist die integrierte Mikrowellenschaltung in der Mittelebene eines mit einem dielektrischen Material gefüllten Hohlleiters angeordnet.

Nach einer Fortbildung der Erfindung ist der Hohlleiter als Rechteckhohlleiter ausgebildet.

Eine andere Weiterbildung der Erfindung besteht darin, daß die Antenne und die Meßsonde oder Meßsonden in einer integrierten Mikrowellenschaltung vereinigt sind, die wenigstens einen ersten streifenförmigen Leiter als Antenne und Signalzuführung für die Antenne und wenigstens einen zweiten Leiter als Meßsonde und Signalableitung von der Meßsonde aufweist.

Die letztgenannten Ausgestaltungen der Antenne und der Meßsonden sind einfach aufgebaut, in engen mechanischen Toleranzen herstellbar und robust.

Einige Ausführungsbeispiele der Erfindung werden im folgenden anhand der Zeichnung näher erläutert. Es zeigen

Fig. 1 eine schematische Darstellung zur Erläuterung des Meßprinzips,

Fig. 2 das mit einer Anordnung nach Fig. 1 gemessene Signal nach Dämpfung und Phasenwinkel,

Fig. 3 eine Ausgestaltung der Meßsonden,

Fig. 4 eine Anordnung, in der Antenne und Meßsonden in einer integrierten Mikrowellenschaltung vereinigt sind,

Fig. 5 Ergebnisse einiger Feuchtemessungen mit einer erfindungsgemäßen Anordnung,

Fig. 6, 7 und 8 einige Ausführungsbeispiele der Erfindung.

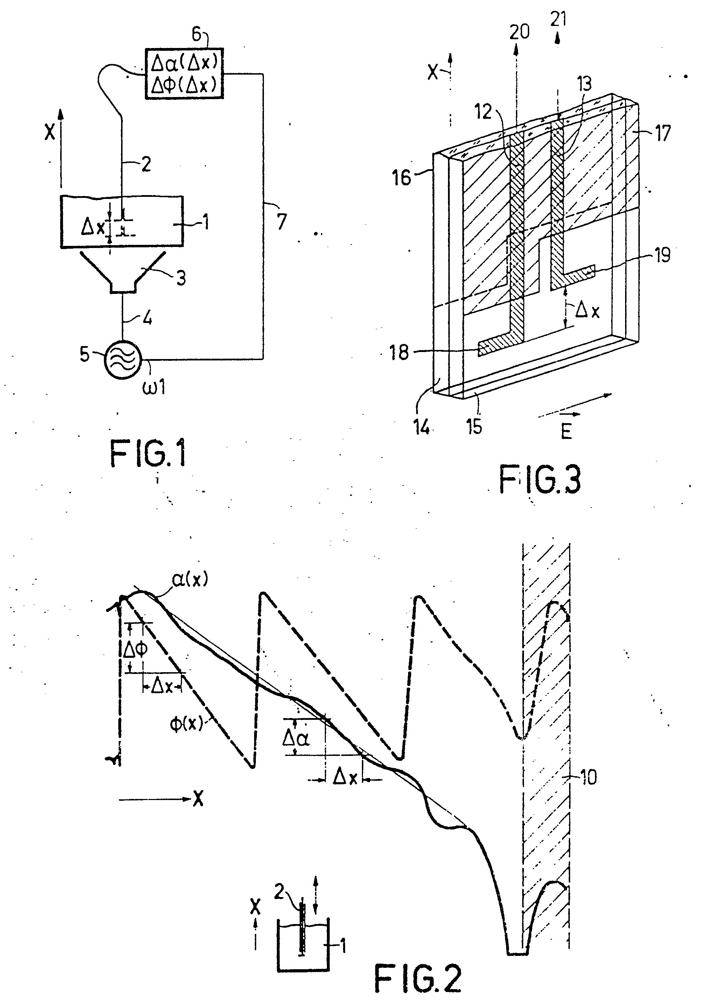

In Fig. 1 ist das Meßprinzip dargestellt, das der erfindungsgemäßen Anordnung zugrunde liegt. In die auszumessende, wasserhaltige Substanz 1 ragt eine in X-Richtung bewegliche Meßsonde 2. In Verlängerung der X-Richtung ist vor der Meßsonde 2 eine Antenne 3 angeordnet, die durch eine Leitung 4 zur Signalzuführung mit einem als Signalquelle dienenden Generator 5 verbunden ist. Eine Auswerteeinrichtung 6 ist an einem ersten Eingang mit der Meßsonde 2 und an einem zweiten Eingang über eine Referenzleitung 7 mit dem Generator 5 verbunden. Der Generator 5 erzeugt eine hochfrequente Wechselspannung. Die Antenne 3 strahlt eine wenigstens nahezu ebene Welle, deren Ausbreitungsrichtung mit der X-Richtung zusammenfällt, in die wasserhaltige Substanz 1 ein. Die Auswerteeinrichtung 6 bestimmt aus der von der Antenne 2 empfangenen Welle im Vergleich mit einem vom Generator 5 über die Referenzleitung 7 eingespeisten Signal als Referenz die Dämpfung $\alpha$ und die Phase $\varphi$ der Welle in Abhängigkeit von der Verschiebung der Meßsonde in X-Richtung und ermittelt daraus die Änderung $\Delta\alpha$ bzw. $\Delta\varphi$ in Abhängigkeit von einer Verschiebung der Antenne um die Strecke $\Delta x$.

Fig. 2 zeigt als Beispiel für Meßkurven, die mit einer Anordnung nach Fig. 1 aufgenommen wurden, die Verläufe der Dämpfung $\alpha$ und der Phase $\varphi$ über der Verschiebung der Meßsonde 2 entlang der X-Richtung. Als wasserhaltige Substanz 1 wurde eine Aufschlämmung von Milchpulver in Wasser verwendet. Die Phase $\varphi$ weist einen wesentlich gleichmäßigeren Verlauf über der Verschiebung x der Meßsonde 3 auf als die Dämpfung $\alpha$ und wird daher bevorzugt für die Messung der Feuchte herangezogen. Als Maß für die Feuchte dient die Phasenänderung pro Längeneinheit $\Delta\varphi/\Delta x$, da sie über die Ausbreitungsgeschwindigkeit der Welle in der wasserhaltigen Substanz und deren Dielektrizitätskonstante unmittelbar mit dem Feuchtegehalt der Substanz im Zusammenhang steht. Befindet sich die Meßsonde 2 in unmittelbarer Nähe der Oberfläche der gemessenen Substanz 1, zeigen die Kurven $\alpha$ und $\varphi$ starke Unregelmäßigkeiten, die auf Oberflächeneffekten, wie z.B. Reflexionen, beruhen und durch den schraffierten Bereich 10 in Fig. 2 dargestellt sind. Für die Feuchtemessung ist dieser Bereich zu meiden.

Da eine bewegte Meßsonde umständlich zu handhaben ist, werden in der erfindungsgemäßen Anordnung vorzugsweise fest angeordnete Meßsonden verwendet. Fig. 3 zeigt ein Ausführungsbeispiel einer erfindungsgemäßen Anordnung mit zwei Meßsonden, die in einer integrierten Mikrowellenschaltung zusammengefaßt sind. Zwischen zwei dielektrischen Platten 14 und 15 sind zwei streifenförmige Leiter 12 und 13 angeordnet, die parallel zur Ausbreitungsrichtung der Welle, d.h. parallel zur X-Richtung, verlaufen. Die Enden 18 und 19 der streifenförmigen Leiter 12 und 13 sind im rechten Winkel zur X-Richtung abgewinkelt und bilden die Meßsonden, die in X-Richtung den Abstand $\Delta x$ aufweisen und in der Art eines Dipols parallel zu den Feldlinien des elektrischen Feldes E der durch die wasserhaltige Substanz tretenden Welle angeordnet sind. Die nach außen gekehrten Flächen der dielektrischen Platten 14 und 15 sind mit leitenden Belägen 16 und 17 bedeckt, die eine Abschirmung für die streifenförmigen Leiter 12 und 13 bilden. Nur die als Meßsonden dienenden, abgewinkelten Enden 18 und 19 der streifenförmigen Leiter 12 und 13 ragen aus der Abschirmung heraus. Die Meßsonden 18 und 19 haben übereinstimmende Abmessungen und damit weitgehend übereinstimmende elektrische Eigenschaften. Der Abstand $\Delta x$ ist kleiner als die Wellenlänge in der wasserhaltigen Substanz 1 und insbesondere kleiner als die Wellenlänge in reinem Wasser. Die Auswerteeinrichtung ist mit Anschlüssen 20 und 21 der streifenförmigen Leiter 12 und 13 verbunden und bestimmt als Maß für die Feuchte der auszumessenden Substanz 7 die Phasendifferenz zwischen den von den Meßsonden 18 und 19 empfangenen und an die Anschlüsse 20 und 21 weitergeleiteten Spannungen. Bei Verwendung der beschriebenen Anordnung der Meßsonden ist die Antenne 3 der Sendeeinrichtung ein von den Meßsonden räumlich getrenntes Bauteil.

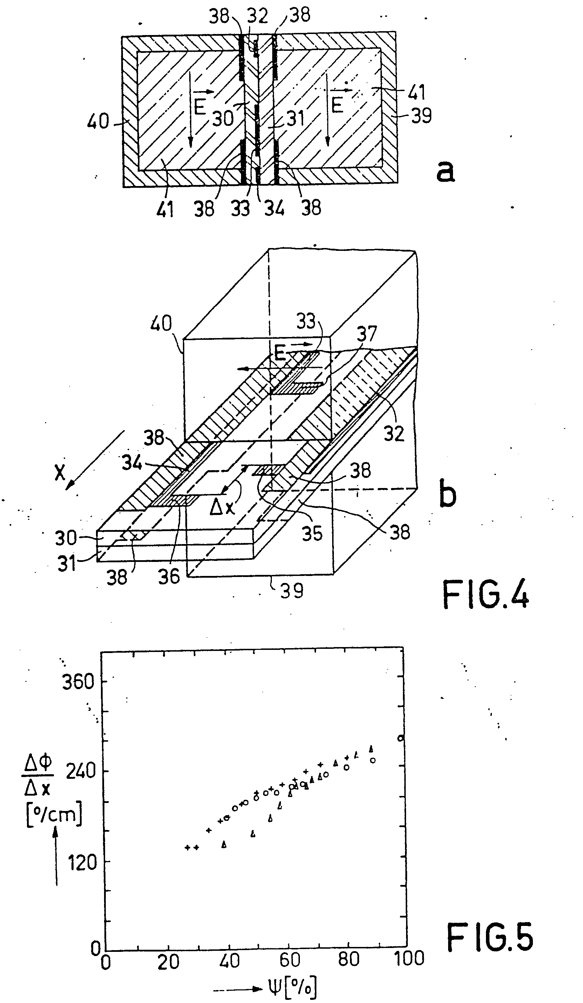

Fig. 4 zeigt eine weitere Ausführungsform, bei der die Antenne der Sendeeinrichtung und die Meßsonden in einem räumlichen Bauteil vereinigt sind. Fig. 4a zeigt einen Querschnitt, Fig. 4b eine perspektivische Darstellung der kombinierten Anordnung von Antenne und Meßsonden. Zwischen zwei flächig aneinanderliegenden dielektrischen Platten 30 und 31 sind mehrere streifenförmige Leiter 32, 33 und 34 angeordnet, die parallel zur X-Richtung verlaufen, welche der Ausbreitungsrichtung der Welle entspricht. Die Leiter 32 und 34 sind an ihren Enden rechtwinklig zur x-Achse abgewinkelt und bilden Meßsonden 35 und 36, wie schon zu Fig. 3 beschrieben. Der Leiter 33 ist ebenfalls rechtwinklig zur x-Achse abgewinkelt, die Abwinklung 37 bildet die Antenne der Sendeeinrichtung. Antenne 37 und Meßsonden 35 und 36 sind parallel zur Richtung der Feldlinien des elektrischen Feldes E ausgerichtet. Die Meßsonden 35 und 36 weisen in X-Richtung den Abstand $\Delta x$ auf. Die äußeren Flächen der dielektrischen Platten 30 und 31 sind teilweise mit leitenden Belägen 38 bedeckt, die die Abschirmungen für die streifenförmigen Leiter 32, 33 und 34 bilden. Antenne 37 und Meßsonden 35 und 36 ragen unter dieser Abschirmung hervor. Die dielektrischen Platten 30 und 31 sind zwischen den Hälften 39 und 40 eines in seiner Längsmittelebene aufgeschnittenen, mit einem Dielektrikum 41 gefüllten Rechteckhohlleiters angeordnet. Der Abschnitt der dielektrischen Platten 30 und 31, in dem die Meßsonden 35 und 36 angeordnet sind, ragt über das Ende des Rechteckhohlleiters 39, 40 hinaus. Die Antenne 37 erregt im Hohlleiter die $H_{10}$-Welle, die am Ende des Hohlleiters als im Bereich der Meßsonden 35 und 36 wenigstens nahezu ebene Welle abgestrahlt und von den Meßsonden 35 und 36 empfangen wird. Zur Durchführung einer Feuchtemessung wird die gesamte Anordnung in die auszumessende Substanz eingebracht.

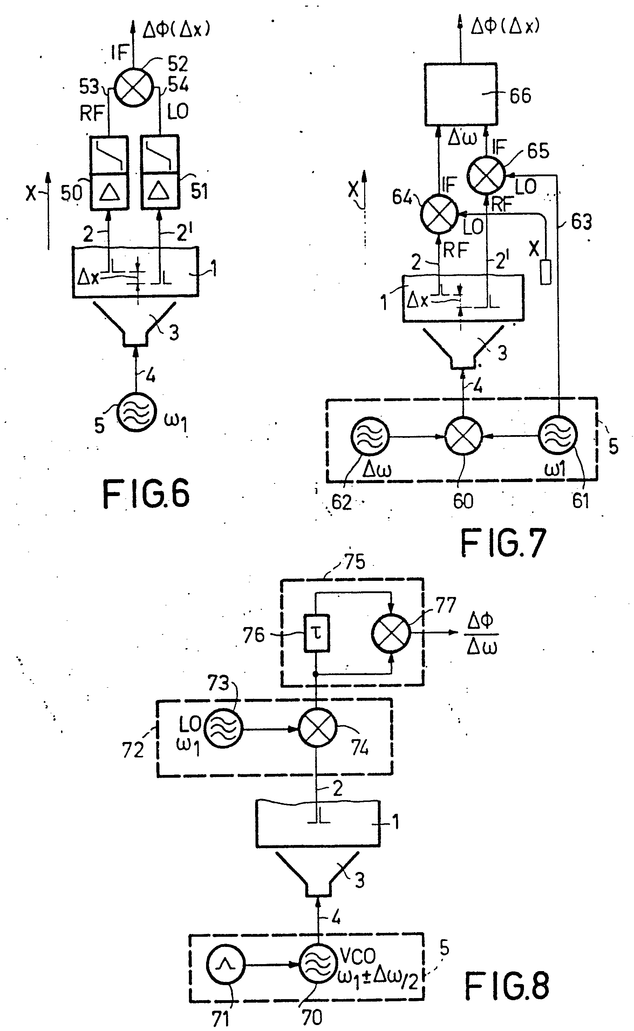

In Fig. 5 sind einige Meßergebnisse dargestellt. Aufgetragen ist die mit einer erfindungsgemäßen Anordnung gemessene Phasenänderung pro Längenänderung $\Delta\varphi/\Delta x$ in Winkelgraden/cm über der relativen Feuchte $\psi$ der ausgemessenen Substanz in %.

Fig. 6 zeigt ein Ausführungsbeispiel einer erfindungsgemäßen Anordnung zur Feuchtemessung, wie sie beispielsweise mit den in Fig. 3 und Fig. 4 beschriebenen Meßsonden aufgebaut werden kann. In der auszumessenden, wasserhaltigen Substanz befinden sich zwei Meßsonden 2 und 2', die in X-Richtung um den Abstand $\Delta x$ versetzt angeordnet und mit den Eingängen zweier Verstärkerstufen 50 und 51 verbunden sind. Wie in Fig. 1 dargestellt, strahlt die Antenne 3 eine wenigstens nahezu ebene Welle in die wasserhaltige Substanz 1 ein. Die von den Meßsonden 2 empfangenen Wechselspannungen werden in den Verstärkerstufen 50 und 51 verstärkt und dem mit Ausgängen 53 und 54 der Verstärkerstufen 50 und 51 verbundenen Mischer 52 zugeleitet, der die Phasendifferenz $\Delta\varphi$ der beiden Wechselspannungen bestimmt.

Fig. 7 zeigt eine andere Ausführungsform einer erfindungsgemäßen Meßanordnung. Ein Einseitenbandgenerator 60 ist mit einem Trägerfrequenzgenerator 61, der eine hochfrequente Wechselspannung der Kreisfrequenz $\omega_1$ erzeugt, und einem Zwischenfrequenzgenerator 62, der eine Wechselspannung der Kreisfrequenz $\Delta\omega$ erzeugt, verbunden. Der Einseitenbandgenerator 60 bildet aus beiden Spannungen ein nach dem Einseitenbandprinzip moduliertes Signal, das über die Leitung 4 der Antenne 3 zugeführt wird. Antenne 3, Meßsonden 2 und 2' und wasserhaltige Substanz 1 sind in gleicher Weise wie in Fig. 6 angeordnet. Die Meßsonden 2 und 2' sind unmittelbar mit dem Signaleingang je eines Mischers verbunden, während der Trägerfrequenzgenerator 61 über einen 3 dB-Leistungsteiler 63 mit den Lokaloszillatoreingängen zweier Mischer 64 und 65 verbunden ist. Auf diese Weise werden die von den Meßsonden empfangenen Signale auf die Zwischenfrequenz umgesetzt. Die Mischer 64 und 65 sind mit einem Phasendiskriminator 66 verbunden, der die Phasendifferenz $\Delta\varphi$ der an den Zwischenfrequenzausgängen der Mischer 64 und 65 anliegenden Wechselspannungen bestimmt.

Fig. 8 zeigt eine dritte Ausführungsform der erfindungsgemäßen Anordnung, die nur eine Meßsonde 2 besitzt. Bei dieser Anordnung ist die Sendeeinrichtung 5 aus einem spannungsgesteuerten Oszillator 70 gebildet, der mit einem Spannungsgenerator 71 verbunden ist. Der Oszillator 70 erzeugt eine Wechselspannung, deren Kreisfrequenz vom Generator 71 durch Aufprägen einer Spannung bestimmter Kurvenform in einem Bereich $\Delta\omega$ um eine Kreisfrequenz $\omega_1$ herum moduliert wird. Die Meßsonde 2 ist mit einem Phasendiskriminator 75 verbunden, der in der skizzierten Weise aus einem Mischer 77 und einer Verzögerungsleitung 76 besteht. In die Leitung von der Meßsonde 2 zum Phasendiskriminator 75 kann wahlweise eine Frequenzumsetzerstufe 72, bestehend aus einem Oszillator 73 und einem Mischer 74, eingefügt sein. Die von der Antenne 3 in bereits beschriebener Weise in die Substanz 1 eingestrahlte Welle wird von der Meßsonde 2 empfangen. Die dadurch an der Meßsonde 2 entstehende Wechselspannung wird ggf. durch die Frequenzumsetzerstufe 72 in das Basisfrequenzband umgesetzt. Die Phase der empfangenen Welle ist in guter Näherung proportional zu ihrer Frequenz und zur Wurzel des Realteils der komplexen Dielektrizitätskonstanten der Substanz 1. Der nachgeschaltete Phasendiskriminator 75 bestimmt die Ableitung der Phase nach der Kreisfrequenz, die bei nicht oder nur schwach dispersiven Substanzen proportional zur Wurzel des Realteils der komplexen Dielektrizitätskonstanten der Substanz 1 ist. Damit liefert das am Ausgang des Phasendiskriminators 75 anliegende Signal ein direktes Maß für die Feuchte der Substanz 1.

**Patentansprüche**

1. Anordnung zur Messung der Feuchte in einer wasserhaltigen Substanz mit Mikrowellen mit einer Sendeeinrichtung, bestehend aus einer Signalquelle und einer mit ihr verbundenen Sendeantenne, mit einer im Strahlungsfeld der Sendeantenne angeordneten Schicht der wasserhaltigen Substanz, mit einer Empfangsantenne, die die Welle innerhalb der Substanz empfängt, und einer mit der Empfangsantenne verbundenen Auswerteeinrichtung, dadurch gekennzeichnet, daß die Sendeantenne eine wenigstens nahezu ebene elektromagnetische Welle in die Substanz einstrahlt, daß als Empfangsantenne mindestens eine Meßsonde vorgesehen ist und daß in der Auswerteeinrichtung die Phase der durch die Substanz tretenden Welle durch Vergleich mit einer Referenz bestimmt wird.

2. Anordnung nach Anspruch 1, dadurch gekennzeichnet, daß wenigstens zwei Meßsonden vorgesehen sind, die in Ausbreitungsrichtung der Welle um einen festen Abstand gegeneinander versetzt angeordnet sind, und daß die Auswerteeinrichtung derart ausgebildet ist, daß sie den Unterschied der Phasen der von den Meßsonden empfangenen Wellen bestimmt.

3. Anordnung nach Anspruch 1, dadurch gekennzeichnet, daß die Sendeeinrichtung derart ausgebildet ist, daß sie eine in ihrer Frequenz modulierte Welle in die Substanz einstrahlt, daß nur eine Meßsonde zum Empfang der durch die Substanz tretenden Welle vorgesehen ist und daß die Auswerteeinrichtung derart ausgebildet ist, daß sie die Änderung der Phase der empfangenen Welle in Abhängigkeit von ihrer Frequenz bestimmt.

4. Anordnung nach Anspruch 2 oder 3, dadurch gekennzeichnet, daß die Meßsonden als integrierte Mikrowellenschaltungen ausgebildet sind, die aus mindestens zwei flächig aneinanderliegenden, dielektrischen Platten bestehen, zwischen denen streifenförmige, elektrische Leiter angeordnet sind, und daß die nach außen gekehrten Flächen der äußeren Platten wenigstens teilweise mit einem elektrisch leitenden Belag bedeckt sind.

5. Anordnung nach Anspruch 4, dadurch gekennzeichnet, daß die integrierte Mikrowellenschaltung in der Mittelebene eines mit einem dielektrischen Material gefüllten Hohlleiters angeordnet ist.

6. Anordnung nach Anspruch 5, dadurch gekennzeichnet, daß der Hohlleiter als Rechteckhohlleiter ausgebildet ist.

7. Anordnung nach Anspruch 5 oder 6, dadurch gekennzeichnet, daß die Antenne und die Meßsonde oder Meßsonden in einer integrierten Mikrowellenschaltung vereinigt sind, die wenigstens einen ersten streifenförmigen Leiter als Antenne und Signalzuführung für die Antenne und wenigstens einen zweiten Leiter als Meßsonde und Signalableitung von der Meßsonde aufweist.

**Claims**

1. An arrangement for measuring the moisture content of an aqueous substance by means of microwaves, comprising a transmitting arrangement formed by a signal source and a transmit aerial connected thereto, the aqueous substance, arrangable in the field of radiation of the transmit aerial, a receive aerial receiving the wave transmitted into the substance and an evaluation arrangement connected to the receive aerial, characterized in that the transmit aerial radiates an at least substantially flat electromagnetic wave into the substance, that the receive aerial is provided by at least one measuring probe and that the phase of the wave transmitted through the substance is determined by a comparison to a reference with the evaluation arrangement.

2. An arrangement as claimed in Claim 1, characterized in that at least two measuring probes are provided which are arranged with a fixed interspace from each other in the propagation direction of the wave and that the evaluation arrangement is of such a construction that it determines the difference between the phases of the waves received by the measuring probes.

3. An arrangement as claimed in Claim 1, characterized in that the transmitting arrangement radiates a frequency-modulated wave into the substance, that only one measuring probe for receiving the wave transmitted through the substance is provided and that the evaluation arrangement determines the change of the phase of the received wave in dependence on its frequency.

4. An arrangement as claimed in Claim 2 or 3, characterized in that the measuring probe or measuring probes is or are in the form of integrated microwave circuits, which consist of at least two dielectric plates whose surfaces are in contact with each other, between which plates strip-shaped electric conductors are arranged and that the outside faces of the outermost plates are coated, at least partially, with an electrically conducting layer.

5. An arrangement as claimed in Claim 4, characterized in that the integrated microwave circuit is arranged in the centre plane of a wave guide which is filled with a dielectric material.

6. An arrangement as claimed in Claim 5, characterized in that the waveguide is in the form of a rectangular waveguide.

7. An arrangement as claimed in Claim 5 or 6, characterized in that the aerial and the measuring probe or measuring probes are combined in one integrated microwave circuit which has at least a first strip conductor acting as an aerial and signal supply means to the aerial and at least a second conductor acting as a measuring probe and signal discharge means from the measuring probe.

**Revendications**

1.- Dispositif pour mesurer l'humidité dans une substance aqueuse au moyen de micro-ondes comportant un dispositif d'émission formé d'une source de signaux et d'une antenne d'émission qui y est connectée, une couche de la substance aqueuse disposée dans le champ d'émission de l'antenne d'émission, une antenne de réception qui reçoit l'onde à l'intérieur de la substance et un dispositif d'évaluation connecté à l'antenne de réception, caractérisé en ce que l'antenne d'émission émet dans la substance une onde électromagnétique au moins à peu près plane, qu'à titre d'antenne de réception, est prévue au moins une sonde de mesure et que dans le dispositif d'évaluation, la phase de l'onde traversant la substance est déterminée par comparaison avec une référence.

2.- Dispositif suivant la revendication 1, caractérisé en ce qu'au moins deux sondes de mesure qui sont décalées l'une de l'autre d'une distance fixe dans le sens de propagation de l'onde sont prévues et que le dispositif d'évaluation est agencé d'une manière telle qu'il détermine la différence des phases des ondes reçues par les sondes de mesure.

3.- Dispositif suivant la revendication 1, caractérisé en ce que le dispositif d'émission est agencé d'une manière telle qu'il émet dans la substance une onde modulée en fréquence, qu'une seule sonde de mesure est prévue pour la réception de l'onde traversant la substance et que le dispositif d'évaluation est agencé d'une manière telle qu'il détermine la variation de phase de l'onde reçue en fonction de sa fréquence.

4.- Dispositif suivant la revendication 2 ou 3, caractérisé en ce que la ou les sondes de mesure ont la forme de circuits à micro-ondes intégrés qui sont constitués d'au moins deux plaquettes diélectriques superposées surface contre surface entre lesquelles des conducteurs électriques en forme de bande sont disposés et que les surfaces tournées vers l'extérieur des plaquettes extérieures sont recouvertes au moins partiellement d'un revêtement conducteur électrique.

5.- Dispositif suivant la revendication 4, caractérisé en ce que le circuit à micro-ondes intégré est disposé dans le plan médian d'un guide d'ondes rempli de matière diélectrique.

6.- Dispositif suivant la revendication 5, caractérisé en ce que le guide d'ondes a la forme d'un guide d'ondes rectangulaire.

7.- Dispositif suivant la revendication 5 ou 6, caractérisé en ce que l'antenne et la ou les sondes de mesure sont rassemblées en un circuit à micro-ondes intégré, qui comporte au moins un premier conducteur en forme de bande à titre d'antenne et d'entrée de signal pour l'antenne et au moins un second conducteur à titre de sonde de mesure et de sortie de signal de la sonde de mesure.

FIG.1

FIG.3

FIG.2

1

FIG.4

FIG.5

$\Delta\Phi(\Delta x)$

IF

53 52
54

RF LO

50 51
X

2 2'

$\Delta x$ 1

3

4

5 $\omega_1$

## FIG.6

$\Delta\Phi(\Delta x)$

66

$\Delta\omega$ IF

IF 65

64 LO

LO RF

RF 63

2 2' X

$\Delta x$ 1

3

4

$\Delta\omega$ $\omega_1$

62 60 61 5

## FIG.7

75

76 77

$\tau$ $\dfrac{\Delta\Phi}{\Delta\omega}$

73

LO
$\omega_1$

72 74

2

1

3

4

VCO
$\omega_1 \pm \Delta\omega/2$ 5

71 70

## FIG.8